# EUROPÄISCHE PATENTSCHRIFT

(11) **EP 0 671 008 B1**
(45) Veröffentlichungstag und Bekanntmachung des Hinweises auf die Patenterteilung: **10.12.1997**
(21) Anmeldenummer: 93902196.0
(22) Anmeldetag: 14.01.1993
(51) Int. Cl.: G01P 3/48, G01D 5/20

(54) **VORRICHTUNG ZUR MESSUNG VON DREHBEWEGUNGEN**
DEVICE FOR MEASURING ROTARY MOVEMENTS
DISPOSITIF POUR MESURER DES MOUVEMENTS ROTATIFS

(30) Priorität: 29.04.1992 DE 4213977
(43) Veröffentlichungstag der Anmeldung: 13.09.1995
(73) Patentinhaber: ALFRED TEVES METALLWARENFABRIK GMBH & CO. OHG, 51702 Bergneustadt (DE)
(72) Erfinder: GOOSSENS, André, F., L., B-2840 Rumst (BE)
(74) Vertreter: Blum, Klaus-Dieter, Dipl.-Ing.
(86) Internationale Anmeldenummer: EP9300072
(87) Internationale Veröffentlichungsnummer: WO9322688

(56) Entgegenhaltungen:
- EP-A- 0 355 502
- DE-A- 3 542 962
- FR-A- 2 112 298

## Beschreibung

Vorrichtung zur Messung von Drehbewegungen und zum Erzeugen eines die Drehbewegung darstellenden elektrischen Wechselsignals, mit einem Signalgeberring, der in Form eines Zahnrades mit Innenverzahnung ausgebildet ist und der mit dem die Drehbewegung ausführenden Teil umläuft, und mit einem stationären, induktiven Meßwertaufnehmer, der in der von dem Signalgeberring aufgespannten Fläche angeordnet ist und der ein doppelseitiges Meßsystem aufweist, das eine Meßspule, einen Spulenkern und Polschuhe umfaßt und bei dem der Magnetfluß durch die Meßspule an beiden axialen Enden der Spule von dem Signalgeber beeinflußt wird.

Eine derartige Vorrichtung ist aus der Offenlegungsschrift DE 39 27 007 A1 bekannt. Als Signalgeberring dient eine Zahnscheibe mit Innenverzahnung. Im Inneren der Spule befindet sich eine diametral ausgerichtete Meßspule, die ein Flußleitstück umschließt, dessen Länge etwa dem Innendurchmesser, verringert um den erforderlichen Luftspalt zwischen den Stirnseiten des Flußleitstückes und den nach innen gerichteten Zähnen des Signalgeberrings, entspricht. Das Flußleitstück ragt nach beiden Seiten aus der Spule heraus. An den beiden Enden dieses Flußleitstückes, also in unmittelbarer Nähe der Innenverzahnung, sind senkrecht zu dem Flußleitstück magnetisierte Permanentmagnete aufgesetzt. Befinden sich an den Enden der Flußleitstücke jeweils zwei Permanentmagnete, sind diese so angeordnet, daß beide mit dem gleichen Pol auf den gegenüberliegenden Seiten des Flußleitstückes aufsitzen und folglich mit dem gleichen Pol nach außen weisen. Befinden sich den beiden Magneten auf einer Spulenseite jeweils Zähne gegenüber, dann entsteht ein Magnetfluß von der jeweiligen Außenseite der Magnete durch die Zahnscheibe zum Flußleitstück und dann zur Innenseite des jeweiligen Magneten. Befinden sich den Magneten Zahnlücken gegenüber, dann verläuft der Hauptfluß über Luft zum Flußleitstück und zu den Innenseiten der Magnete. Mit anderen Worten: Der Magnetfluß verläuft entweder, wenn ein Zahn dem einzelnen Magneten gegenübersteht, über diesen Zahn oder, wenn eine Zahnlücke dem Magneten gegenübersteht, durch Luft zu dem Flußleitstück und zu dem auf dem Leitstück sitzenden Pol des Magneten. An den beiden Spulenseiten wechselt daher der Magnetfluß durch das Flußleitstück in Abhängigkeit davon, ob sich den Magneten Zahnlücken oder Zähne gegenüber befinden. Es werden also gewissermaßen die durch die einzelnen Permanentmagnete im Zusammenwirken mit den einzelnen Zähnen hervorgerufene Magnetflußänderungen überlagert. Die erreichbare Höhe des Meßsignals hängt von der Anzahl der verwendeten Permanentmagnete ab.

Ferner ist es bereits bekannt (DE 35 42 962 A1), in die Meßspule eines induktiven Meßwertaufnehmers einen Magnetkern einzubringen, der senkrecht zur Spulenachse magnetisiert ist und auf dessen Polflächen, also parallel zur Achse der Meßspule, jeweils ein plattenförmiger Polschuh aufgelegt ist. An der dem Signalgeberring bzw. den Zähnen dieses Ringes zugewandten Spulenseite ragen die Polschuhe aus der Spule hervor. Das mit einer solchen Meßanordnung gewonnene Meßsignal hängt wesentlich von dem Luftspalt zwischen den Polschuhen und den Zähnen und somit von den Einbautoleranzen ab.

Der Erfindung liegt nun die Aufgabe zugrunde, eine Meßvorrichtung zu entwickeln, die sich im Vergleich zu bekannten Vorrichtungen vor allem durch ein höheres Nutzsignal und geringere Empfindlichkeit gegen Luftspalttoleranzen auszeichnet. Besonderen Wert war auf die Eignung für Signalgeberringe mit geringem Durchmesser gelegt, um einen Einbau in ein Radlager zu begünstigen.

Es hat sich gezeigt, daß diese Aufgabe mit einer Vorrichtung der eingangs genannten Art gelöst werden kann, deren Besonderheit darin besteht, daß der Spulenkern einen senkrecht zur Spulenachse magnetisierten Permanentmagneten und langgestreckte, auf den Polflächen, parallel zur Spulenachse angeordnete Polschuhe aufweist, deren Endstücke beidseitig aus der Spule herausragen und bis zu dem Signalgeberring reichen, und daß die Innenverzahnung des Signalgeberrings und die Polschuhe derart ausgebildet, angeordnet und aufeinander abgestimmt sind, daß stes, wenn das Endstück eines Polschuhs einem Zahn gegenübersteht, das diametral entgegengesetzte Endstück des zweiten Polschuhs ebenfalls einem Zahn, die beiden anderen Endstücke der Polschuhe Zahnlücken gegenüberstehen, so daß bei der Drehbewegung abwechselnd der Magnetfluß über das Endstück eines Polschuhs zu dem diametral entgegengesetzten Endstück des auf der zweiten Polfläche angeordneten Polschuhs, danach diametral über die beiden anderen Endstücke der Polschuhe usw. verläuft.

Durch die Ausbildung der Meßspule und die Anordnung der Polschuhe im Kern der Meßspule und relativ zu den magnetischen Segmenten oder Zähnen des Signalgeberringes wird eine besonders hohe Änderung des Magnetflusses durch die Spule über die beidseitigen Luftspalte und über den Signalgeberring erreicht. Der über ein Endstück eines Polschuhes der doppelseitigen Meßspule, über den Magnetkern zu dem diametral angeordneten Endstück des zweiten Polschuhes, über die Luftspalte zwischen den Endstücken der Polschuhe und dem Signalgeberring verlaufenden Magnetfluß ändert bei der relativen Drehbewegung ständig seine Flußrichtung, was die gewünschte Erhöhung des induzierten Nutzsignals in der Meßspule zur Folge hat. Weiterhin ist es von Vorteil, daß sich eine toleranzbedingte Exzentrizität der rotierenden Meßspule in dem Signalgeberring vergleichsweise gering auswirkt, weil die Luftspalte auf den gegenüberliegenden Seiten quasi hintereinandergeschaltet sind und daher eine Luftspaltvergrößerung auf einer Seite durch die Luftspaltverringerung auf der Gegenseite weitgehend ausgeglichen wird. Auch bei einer Abweichung von der Mittelstellung ist ein Mindestnutzsignal gewährleistet.

Eine alternative, im Prinzip gleichartige Ausbildung der erfindungsgemäßen Vorrichtung besteht darin, daß der Signalgeber zwei miteinander gekoppelte Zahnräder aufweist, zwischen denen der Meßwertaufnehmer angeordnet ist, wobei wiederum der Spulenkern aus einem senkrecht zur Spulenachse magnetisierten Permanentmagneten und aus zwei langgestreckten, auf den Polflächen der Magneten, parallel zur Spulenachse angeordneten Polschuhen besteht, deren Endstücke beidseitig aus der Spule herausragen und bis zu den Zahnungen reichen. Die Zahnräder und die Polschuhe sind derart ausgebildet und angeordnet, daß stets, wenn das Endstück eines Polschuhs einem Zahn gegenübersteht, das Endstück des auf der zweiten Spulenseite herausragenden zweiten Polschuhs ebenfalls einem Zahn, die beiden Endstücke der Polschuhe Zahnlücken gegenüberstehen, so daß wiederum bei der Drehbewegung abwechselnd der Magnetfluß über das Endstück eines Polschuhes zu dem diametral entgegengesetzten Endstück des auf der zweiten Polfläche angeordneten Polschuhes, danach diametral über die beiden anderen Endstücke der Polschuhe usw. verläuft. Die beiden Zahnräder des Signalgebers können zweckmäßigerweise koaxial angeordnet sein, wobei das äußere Zahnrad mit einer Innenverzahnung, das innere Zahnrad mit einer Außenverzahnung versehen sind.

Andererseits ist es jedoch auch möglich, die beiden Zahnräder parallel zueinander anzuordnen und auf den einander zugeordneten Stirnflächen zu verzahnen. In diesem Fall wird die doppelseitige Meßspule parallel zu der Achse, um die sich die beiden Zahnräder drehen, zwischen den Zahnrädern stationär angeordnet.

Anstelle der Zahnräder können grundsätzlich Signalgeberringe mit Aussparungen oder aus magnetischem und nichtmagnetischen Segmenten zusammengesetzte Ringe verwendet werden, wobei die Aussparungen bzw. die nichtmagnetischen Segmente den Zahnlücken entsprechen.

Weitere Einzelheiten der Erfindung gehen aus der folgenden Beschreibung von Ausführungsbeispielen anhand der beigefügten Abbildungen hervor.

Es zeigen
- Fig. 1: in schematischer Darstellung eine Meßvorrichtung nach der Erfindung, bei der eine Meßspule im Inneren eines innenverzahnten Signalgeberringes angeordnet ist,
- Fig. 2: ein weiteres Ausführungsbeispiel der Erfindung, bei dem als Signalgeberring zwei koaxial angeordnete Zahnräder, zwischen denen die doppelseitige Meßspule angeordnet ist, verwendet sind,
- Fig. 3: in gleicher Darstellungsweise wie Fig. 2 eine alternative Ausführungsform, bei der der Signalgeberring aus zwei parallelen, miteinander gekoppelten Zahnrädern besteht,
- Fig. 4: im Axialschnitt eine Ausführungsart eines steckbaren Radlagersensors,
- Fig. 5: einen Sensor ähnlich dem Sensor nach Fig. 4 im vergrößerten Maßstab und
- Fig. 6: im Diagramm zur Veranschaulichung der Erfindung die Ausgangsspannung eines Meßwertaufnehmers in Abhängigkeit von dem Luftspalt.

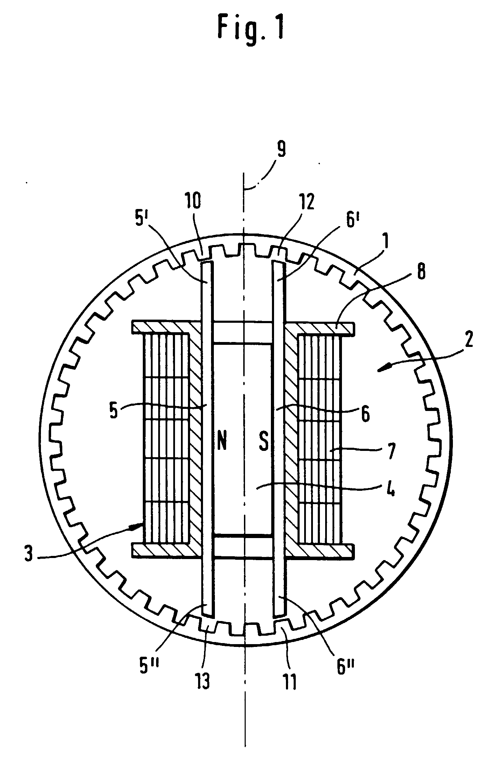

Den prinzipiellen Aufbau und die Wirkungsweise einer Meßvorrichtung nach der Erfindung veranschaulicht Fig. 1. Die Meßvorrichtung besteht im wesentlichen aus einem Signalgeberring 1 und einem stationären Meßwertaufnehmer 2. Der Meßwertaufnehmer wird häufig auch als "Sensor" bezeichnet. Dieser Meßwertaufnehmer ist als doppelseitiges Meßsystem ausgebildet, das sich aus einer Meßspule 3, einem Permanentmagneten 4 und zwei Polschuhen 5,6 zusammensetzt. Als Meßspule 3 dienen eine oder mehrere Wicklungen 7 auf einem Spulenkörper 8. Der Permanentmagnetkern ist senkrecht zu der durch Strichpunktierung angedeuteten Spulenachse 9 magnetisiert. Die Polschuhe 5,6 sind in Form von langgestreckten, plattenförmigen Körpern ausgebildet und liegen jeweils auf einer Polfläche N,S des Magneten 4 derart auf, daß sie auf beiden Seiten aus der Spule 3 herausragen und bis zu dem Signalgeberring 1 reichen, wobei ein geringer, genau definierter Luftspalt auf beiden Seiten der Meßspule zwischen den Enden bzw. Stirnseiten der Polschuhe und dem um die Meßspule rotierenden Signalring 1 besteht.

Als Signalgeberring 1 dient im Ausführungsbeispiel nach Fig. 1 ein innenverzahntes Zahnrad. Das von dem Permanentmagneten 4 erzeugte Magnetfeld ruft einen magnetischen Fluß über die Polschuhe, die beidseitigen Luftspalte des doppelseitigen Meßsystems und über den Signalgeberring hervor. Durch die Änderung des magnetischen Flusses in Abhängigkeit von dem Luftspalt an den Stirnseiten der Polschuhe 5,6 bzw. von der relativen Lage der Polschuh-Stirnseiten zu den Zähnen (oder magnetischen Polen) der Signalgeberscheibe 1 wird in der Meßspule 3 in bekannter Weise eine Signalspannung induziert, deren Höhe und/oder Frequenz zur Ermittlung der Drehzahl ausgewertet werden kann.

Bei der Meßvorrichtung nach vorliegender Erfindung sind die Polschuhe 5,6 und die Verzahnung des Signalgeberringes 1 derart ausgebildet und aufeinander abgestimmt, daß sich stets, wenn die Stirnseite des Endstücks 5' eines Polschuhes 5 einem Zahn 10 des Signalgeberrades 1 gegenübersteht, auch die diametrale Stirnseite 6" des auf der zweiten Polfläche des Permanentmagneten 4 aufliegenden Polschuhes 6 einem Zahn 11 gegenübersteht.

Zu diesem Zeitpunkt, wenn die genannten Endstücke 5',6" der Polschuhe 5 bzw. 6 Zähne 10,11 des Signalgeberrings 1 konfrontieren, stehen den beiden anderen diametralen Endstücken 6',5" der Polschuhe 6,5 Zahnlücken 12,13 gegenüber. In diesem betrachteten Augenblick verläuft also der Hauptmagnetfluß über die Zähne 10,11 des Signalgeberrings 1, die engen Luftspalte zwischen diesen Zähnen und den Endstücken 5',6'' der Polschuhe 5 und 6, über den Permanentmagneten 4 und über den Signalgeberring 1. Sobald sich infolge der Weiterdrehung des Signalgeberringes 1 die Endstücke 5',6" in Höhe der anschließenden

Zahnlücken befinden, stehen die beiden diametralen Endstücke 6',5" der Polschuhe 6,5 nunmehr Zähnen gegenüber; der magnetische Fluß über die Polschuhe 5,6 ändert dadurch seine Richtung. In der Meßspule 3 wird eine Signalspannung induziert, die sich gewissermaßen aus zwei Komponenten, nämlich aus der Abnahme des magnetischen Flusses infolge des Übergangs von den diametralen Zähnen zu den Zahnlücken und aus dem Anstieg des magnetischen Flusses in entgegengesetzter Richtung durch den Übergang von den Zahnlücken zu den Zähnen zusammensetzt.

Anstelle eines innenverzahnten Zahnrads kann natürlich auch ein aus magnetischen und nicht magnetischen Segmenten zusammengesetzter Ring, ein Ring mit Aussparungen, usw., wobei die nicht magnetischen Segmente bzw. die Aussparungen den Zahnlücken entsprechen, als Signalgeberring 1 verwendet werden.

In der Ausführungsart der Erfindung nach Fig. 1 ist grundsätzlich der stationäre Meßwertaufnehmer, nämlich die Meßspule 3, auf einem Innendurchmesser des Signalgeberrings angeordnet. Die beiden Polschuhe 5,6 befinden sich auf Parallelen zu diesem Innendurchmesser.

Bei dieser Ausführungsart wird also eine Änderung des magnetischen Flusses auf beiden Seiten der doppelseitigen Meßspule 3 durch die Zähne und Zahnlücken des gleichen Zahnrades als Folge der zu messenden Drehbewegung herbeigeführt und dadurch eine Spannung in der Spule 3 induziert, deren Amplitude und Frequenz die Drehbewegung wiedergibt.

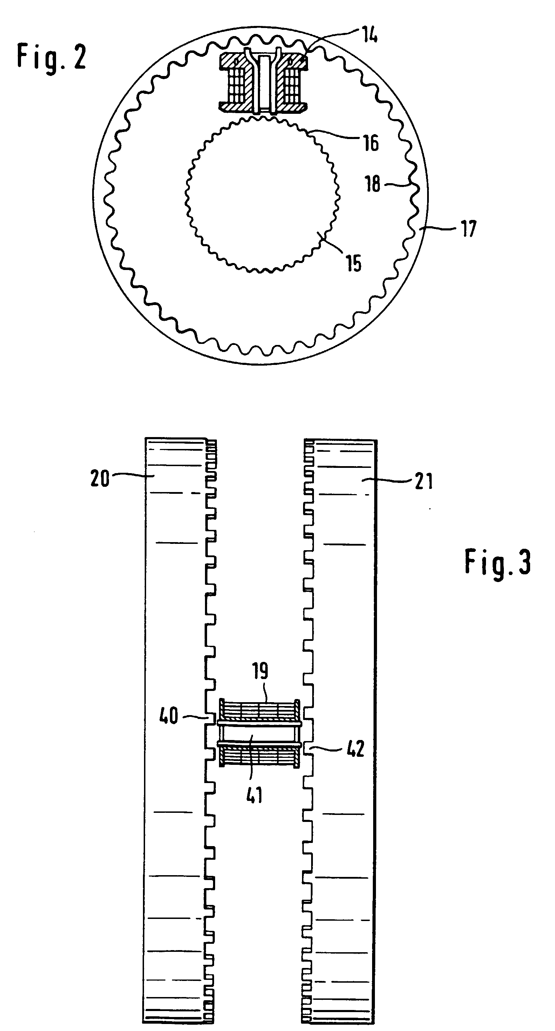

Es ist jedoch auch möglich, eine doppelseitige Meßspule 14, wie dies Fig. 2 veranschaulicht, zwischen zwei verschiedenen, miteinander gekoppelten Zahnungen bzw. Zahnrädern anzuordnen. Eine entsprechende Ausbildung und Anordnung der Polschuhe, insbesondere Polschuhen-Endstücke, in Relation zu den Zähnen und Zahnlücken, wie dies anhand der Fig. 1 beschrieben wurde, führt auch in diesem Fall zu der Richtungsänderung des Magnetflusses und damit zu einem relativ hohen, gewissermaßen aus zwei Komponenten zusammengesetzten Nutzsignal. In der Anordnung nach Fig. 2 sitzt die Meßspule 14 zwischen einem inneren Signalgeberring 15, nämlich einem Zahnrad mit Außenverzahnung 16, und einem Außenring 17, der in ähnlicher Weise wie der Signalgeberring 1 nach Fig. 1 in Form eines Zahnrades 17 mit Innenverzahnung 18 realisiert ist. Die Ausführungsart nach Fig. 2 ist auch dann verwendbar, wenn der Innenraum einer drehenden Welle zum Einbau der Meßspule nicht zur Verfügung steht.

Schließlich ist in Fig. 3 eine Ausführungsform der Erfindung dargestellt, bei der ein doppelseitiges Meßsystem bzw. eine doppelseitige Meßspule 19 parallel zu der Achse, deren Drehbewegung gemessen werden soll, angeordnet ist. Die Signalgeberringe 20,21 befinden sich in diesem Fall auf zwei parallelen Scheiben und sind zweckmäßigerweise in Form von stirnverzahnten Rädern mit gleicher Zahnteilung realisiert. Beide Signalgeberringe oder Zahnräder sind fest miteinander gekoppelt. Durch gegenseitiges Versetzen um einen Winkel, der der Breite eines Zahnes entspricht, oder auf ähnliche Weise muß darauf geachtet werden, daß entsprechend der zuvor anhand der Fig. 1 beschriebenen Weise während der Drehbewegung der magnetische Fluß über die Polschuhe und über die Luftspalte zwischen den Polschuhen-Endstücken und den Zähnen und den Signalgeberringen seine Richtung ändert. Diese versetzte Anordnung der Signalgeberringe 20,21 bzw. der beiden stirnverzahnten Räder ist in Fig. 3 gezeigt. Der Hauptmagnetfluß verläuft in der dargestellten Position wiederum über das einem Zahn 40 gegenüberstehenden Endstück eines Polschuhs, über den Spulenkern 41, über den zweiten Polschuh und über den dem Endstück des zweiten Polschuhs gegenüberstehenden Zahn 42 des zweiten Zahnrads.

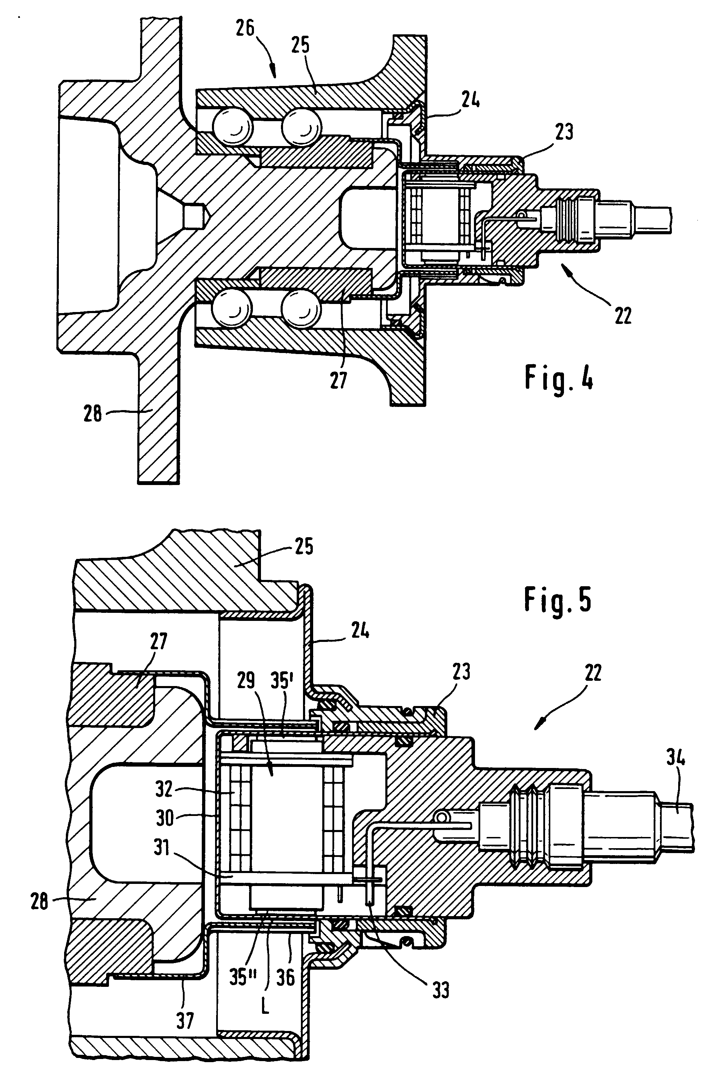

Die Figuren 4 und 5 zeigen eine besonders zweckmäßige Ausführung und Anordnung einer Meßvorrichtung nach der Erfindung, die für den Einbau in ein Radlager vorgesehen ist. Die Meßvorrichtung ist in diesem Fall in Form eines steckbaren Meßwertaufnehmers bzw. Sensors 22 ausgebildet. Der Sensor 22 sitzt in einem Sensorgehäuse 23, das mit Hilfe eines Flansches, Halteringes 24 oder dergl. an dem feststehenden Außenring 25 eines Radlagers verbunden bzw. befestigt ist. Ein Innenring 27 des Radlagers 26, das eine Radwelle 28 lagert, führt die Drehbewegung aus, die gemessen werden soll.

Fig. 5 zeigt die Ausführungsart nach Fig. 4 in vergrößerter Darstellung und läßt daher weitere Einzelheiten erkennen. Für gleiche Teile werden in Fig. 4 und 5 die gleichen Bezugsziffern verwendet, wobei für die Erfindung unbedeutende Abweichungen vernachlässigt werden.

Der steckbare Sensor 22 nach Fig. 5 (und Fig. 4) enthält als elektrisch wesentliche Bauteile eine doppelseitige Meßspule 29, die in ihrem Aufbau und ihrer Funktion der anhand der Fig. 1 beschriebenen Meßspule 3 entspricht. Die Spule 29 ist in einem zylinderförmigen oder topfförmigen Gehäuse 30 angeordnet, und zwar derart, daß die Spulenachse senkrecht zu der Achse des Gehäuses 30 und damit auch senkrecht zu der Achse des drehenden Rades ausgerichtet ist. Wesentliche Bestandteile der Spule sind wiederum eine von einem Spulenkörper 31 getragene Wicklung 32, ein Permanentkern und Polschuhe. In Fig. 5 sind nur die bis zu der Wandung des zylinderförmigen Gehäuses 30 reichenden Endstücke 35',35" eines Polschuhes (35) erkennbar. Die Anschlüsse der Wicklung 32 führen über im Inneren des Sensors 22 angedeutete elektrische Leiter 33 und ein Anschlußkabel 34 nach außen.

Der Signalgeberring ist in der Ausführungsart der Erfindung nach Fig. 5 in Form eines hohlzylinderförmigen Abschnitts 36 einer an dem Lagerinnenring 27 befestigten Hülse 37 ausgebildet. Der hohlzylinderförmige Abschnitt 36 ist innen in gleicher Weise wie der Signalgeberring nach Fig. 1 mit Zähnen versehen; natürlich kann auch eine andere der bekannten, zuvor beschriebenen Signalgeber-Ausführungen gewählt werden.

Der hohlzylinderförmige Abschnitt 36 der Signalgeberringes 36/37 ist derart relativ zu dem Sensor 22 oder auf dem zylinderförmigen oder topfförmigen Gehäuse 30 des Sensors 22 gelagert, daß eine ungehinderte Drehbewegung um die gemeinsame Achse relativ zu dem stationären Sensor 22 stattfinden kann. Da ein möglichst konstanter, geringer Luftspalt L zwischen den Stirnflächen 35',35" der Polschuhe 35 und den Zähnen oder Segmenten der Signalgebers eingehalten werden soll (in Fig. 1 wurde die gegenseitige Anordnung der Polschuhe 5,6 und der Zähne 10,11 erläutert), ist eine gleitende Lagerung des zylinderförmigen Abschnittes 36 auf dem Gehäuse 30 des Sensors 22 von Vorteil. Eine Gleitlagerung mit Hilfe einer Gleitschicht dürfte für viele Anwendungsfälle genügen.

Aus den Fig. 4 und 5 ist erkennbar, daß sich die Erfindung in diesem Ausführungsbeispiel zu einer besonders einfachen, kostengünstigen und mit geringem Aufwand montierbaren Vorrichtung führt.

Ein weiterer wichtiger Vorteil liegt in dem geringen Platzbedarf der erfindungsgemäßen Meßvorrichtung. Das Gehäuse 23, in das der Sensor 22 eingesteckt wird, läßt sich z.B. als Bestandteil der Fettkappe eines Radlagers ausbilden.

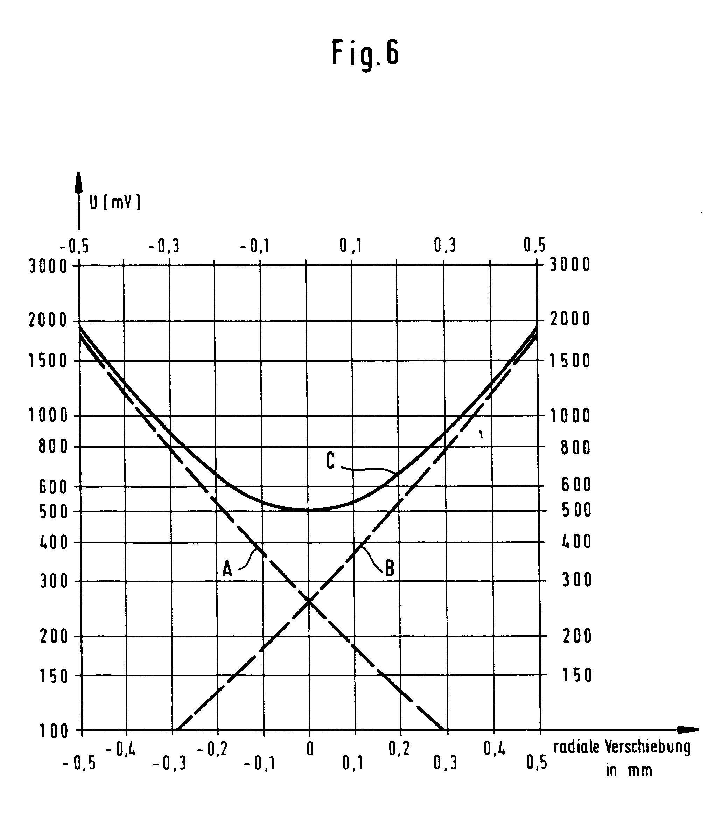

Das Diagramm nach Fig. 6 gilt für den prinzipiellen Aufbau einer Meßvorrichtung nach der Erfindung in der anhand der Fig. 1, 4 und 5 beschriebenen Weise. Wiedergegeben ist in Fig. 6 die mit Hilfe der Meßspule 3,29 gewonnene Signalspannung bzw. Signalspannungsamplitude U in Abhängigkeit von einer Radialverschiebung der Meßspule relativ zu der Drehachse des Signalgeberrings (1,36).

Die beiden gestrichelt dargestellten Komponenten A und B gelten jeweils für eine einseitige Meßspule, die durchgezogene Kennlinie C für das erfindungsgemäß vorgesehene doppelseitige Meßsystem. Aus dieser Darstellung ist erkennbar, daß durch die Überlagerung die Abhängigkeit der Ausgangsspannung von der radialen Verschiebung und daher von Luftspaltänderungen relativ gering ist. Das Nutzsignal nach der Kurve C in Fig. 6 liegt in dem untersuchten Bereich in jedem Fall über dem relativ hohen Minimalwert von 500 mV (bei 50 Hz, einem Zahnmodul von ca. 0,6 mm und einem Luftspalt von ca. 0,5 mm). Für Ausführungsbeispiele der Erfindung nach Fig. 2 und 3 sind die gleichen Meßergebnisse zu erwarten.

## Patentansprüche

1. Vorrichtung zur Messung von Drehbewegungen und zum Erzeugen eines die Drehbewegung darstellenden elektrischen Wechselsignals,
mit einem Signalgeberring, der in Form eines Zahnrades mit Innenverzahnung ausgebildet ist und der mit dem die Drehbewegung ausführenden Teil umläuft,
und mit einem stationären, induktiven Meßwertaufnehmer, der in der von dem Signalgeberring aufgespannten Fläche angeordnet ist und der ein doppelseitiges Meßsystem aufweist, das eine Meßspule, einen Spulenkern und Polschuhe umfaßt und bei dem der Magnetfluß durch die Meßspule an beiden axialen Enden der Spule von dem Signalgeber beeinflußt wird,
dadurch **gekennzeichnet,**
daß der Spulenkern einen senkrecht zur Spulenachse magnetisierten Permanentmagneten (4) und langgestreckte, auf den Polflächen, parallel zur Spulenachse angeordnete Polschuhe (5,6,35) aufweist, deren Endstücke (5',5",6',6", 35',35") beidseitig aus der Spule (3,14,19,29) herausragen und bis zu dem Signalgeberring (1,15,17,20,21,36) reichen,
und daß die Innenverzahnung des Signalgeberrings und die Polschuhe derart ausgebildet, angeordnet und aufeinander abgestimmt sind, daß stets, wenn das Endstück (5',5",6',6",35',35") eines Polschuhs (5,6,35) einem Zahn (10,11) gegenübersteht, das diametral entgegengesetzte Endstück des zweiten Polschuhs ebenfalls einem Zahn, die beiden anderen Endstücke der Polschuhe Zahnlücken (12,13) gegenüberstehen, so daß bei der Drehbewegung abwechselnd der Magnetfluß über das Endstück (5') eines Polschuhs (5) zu dem diametral entgegengesetzten Endstück (6") des auf der zweiten Polfläche angeordneten Polschuhs (6), danach diametral über die beiden anderen Endstücke (5",6') der Polschuhe (5,6) usw. verläuft.

2. Vorrichtung zur Messung von Drehbewegung und zum Erzeugen eines die Drehbewegung darstellenden elektrischen Wechselsignals, mit einem Signalgeber, der mit dem die Drehbewegung ausführenden Teil umläuft, mit einem stationären, induktiven Meßwertaufnehmer, der eine doppelseitige Meßspule besitzt, die einen Spulenkern und Polschuhe umfaßt und bei der der Magnetfluß durch die Meßspule an beiden axialen Enden der Spule von dem Signalgeber beeinflußt wird, dadurch **gekennzeichnet,** daß der Signalgeber zwei miteinander gekoppelte Zahnräder (15,17) aufweist, zwischen denen der Meßwertaufnehmer (14,19) angeordnet ist,
daß der Spulenkern aus einem senkrecht zur Spulenachse magnetisierten Permanentmagneten (4) und aus zwei langgestreckten, auf den Polflächen des Magneten, parallel zur Spulenachse angeordneten Polschuhen besteht, deren Endstücke beidseitig aus der Spule herausragen und bis zu den Zahnungen reichen,
sowie daß die Zahnräder und die Polschuhe derart ausgebildet und angeordnet sind, daß stets, wenn das Endstück eines Polschuhes einem Zahn (40) gegenübersteht, das Endstück des auf der zweiten Spulenseite herausragenden zweiten Polschuhs ebenfalls einem Zahn (42), die beiden anderen Endstücke der Polschuhe Zahnlücken gegenüberstehen, so daß bei der Drehbewegung abwechselnd der Magnetfluß über das Endstück eines Polschuhs zu dem diametral entgegengesetzten Endstück des auf der zweiten Polfläche angeordneten Polschuhs, danach diametral über die beiden anderen Enstücke der Polschuhe usw. verläuft.

3. Vorrichtung nach Anspruch 2, dadurch **gekennzeichnet,** daß die beiden Zahnräder (17,19) des Signalgebers koaxial angeordnet sind, wobei das äußere Zahnrad (17) mit einer Innenverzahnung (18), das innere Zahnrad (15) mit einer Außenverzahnung (16) versehen sind.

4. Vorrichtung nach Anspruch 2, dadurch **gekennzeichnet,** daß die beiden Zahnräder (20,21) parallel zueinander angeordnet und auf den einander zugewandten Stirnflächen verzahnt sind.

5. Vorrichtung nach einem oder mehreren der Ansprüche 1 bis 4, dadurch **gekennzeichnet,** daß anstelle der Zahnräder Ringe mit Aussparungen oder aus magnetischen und nichtmagnetischen Segmenten zusammengesetzte Ringe vorgesehen sind, wobei die Aussparungen bzw. die Bereiche mit nichtmagnetischem Material den Zahnlücken entsprechen.

## Claims

1. A device for measuring rotary motions and for generating an electric alternating signal representative of the rotary motion, including a signal generator ring which is configured as a toothed wheel with inwardly directed teeth and rotates with the part undergoing the rotary motion, and a stationary inductive transducer which is arranged within the surface defined by the signal generator ring and has a double-sided measuring system which comprises a measuring coil, a coil core and pole shoes, and wherein the magnetic flux through the measuring coil is influenced by the signal generator on both axial ends of the coil,
**characterized** in that the coil core has a permanent magnet (4), which is magnetized perpendicularly to the coil axis, and elongated pole shoes (5, 6, 35) which are provided on pole surfaces of the magnet and arranged parallel to the coil axis and whose end pieces (5', 5", 6', 6", 35', 35") protrude from both sides of the coil (3, 14, 19, 29) and extend as far as the signal generator ring (1, 15, 17, 20, 21, 36), and in that the inwardly directed teeth of the signal generator ring and the pole shoes are designed, arranged and adapted with respect to one another so that whenever the end piece (5', 5", 6', 6", 35', 35") of a pole shoe (5, 6, 35) is opposite a tooth (10, 11), the diametrically opposite end piece of the other pole shoe is also opposite a tooth, and the other two end pieces of the pole shoes are opposite tooth gaps (12, 13) so that, during the rotary motion, the magnetic flux alternately passes via the end piece (5') of one pole shoe (5) to the diametrically opposite end piece (6") of the pole shoe (6) arranged on the other pole surface, the flux then passing diametrically via the two other end pieces (5", 6') of the pole shoes (5, 6), etc.

2. A device for measuring rotary motions and for generating an electric alternating signal representative of the rotary motion, including a signal generator ring which rotates with the part undergoing the rotary motion, and a stationary inductive transducer which has a double-sided measuring coil that comprises a coil core and pole shoes, and wherein the magnetic flux through the measuring coil is influenced by the signal generator on both axial ends of the coil,
**characterized** in that the signal generator has two toothed wheels (15, 17) coupled to each other, with the transducer (14, 19) being arranged between them, in that the coil core consists of a permanent magnet (4) magnetized perpendicularly to the coil axis and of two elongated pole shoes which are provided on the pole surfaces of the magnet and arranged parallel to the coil axis and whose end pieces protrude from both sides of the coil and extend as far as the teeth, and in that the toothed wheels and the pole shoes are designed and arranged so that, when the end piece of one pole shoe is opposite a tooth (40), the end piece of the other pole shoe protruding from the second coil side is likewise opposite a tooth (42), the two other end pieces of the pole shoes being opposite tooth gaps so that, during the rotary motion, the magnetic flux alternately passes via the end piece of one pole shoe to the diametrically opposite end piece of the pole shoe arranged on the other pole surface, the flux then passing diametrically via the two other end pieces of the pole shoes, etc.

3. Device as claimed in claim 2,
**characterized** in that the two toothed wheels (17, 19) of the signal generator are arranged coaxially, with the outside toothed wheel (17) being provided with inwardly directed teeth (18) and the inside toothed wheel (15) being provided with outwardly directed teeth (16).

4. Device as claimed in claim 2,
**characterized** in that the two toothed wheels (20, 21) are arranged parallel to each other and are geared on the confronting front faces.

5. Device as claimed in any one or more of claims 1 to 4,
**characterized** in that instead of the toothed wheels, signal generator rings with clearances or rings composed of magnetic and non-magnetic segments are used, with the clearances or the non-magnetic segments corresponding to the tooth gaps.

## Revendications

1. Dispositif permettant de mesurer des mouvements de rotation et de produire un signal électrique fluctuant représentant le mouvement de rotation, comprenant :
un anneau générateur de signal qui est réalisé en forme de roue dentée à denture intérieure et qui tourne avec la pièce exécutant le mouvement de rotation,
et un détecteur de valeur de mesure, de type inductif et fixe, qui est disposé dans la surface sous-tendue par l'anneau générateur de signal et comporte un système de mesure à deux côtés qui comprend une bobine de mesure, un noyau de bobine et des pièces polaires et dans lequel le flux magnétique traversant la bobine de mesure aux deux extrémités axiales de la bobine est soumis à l'influence du générateur de signal,
caractérisé
en ce que le noyau de bobine comporte un aimant permanent (4) aimanté perpendiculairement à l'axe de la bobine, et des pièces polaires (5, 6, 35) de forme allongée qui sont disposées sur les surfaces polaires parallèlement à l'axe de bobine et dont des éléments d'extrémité (5', 5", 6', 6", 35', 35") font saillie des deux côtés hors de la bobine (3, 14, 19, 29) et s'étendent jusqu'à l'anneau générateur de signal (1, 15, 17, 20, 21, 36)
et en ce que la denture intérieure de l'anneau générateur de signal et les pièces polaires sont réalisées, disposées et mutuellement adaptées de façon telle que, chaque fois que l'élément d'extrémité (5', 5", 6', 6", 35', 35") d'une pièce polaire (5, 6, 35) fait face à une dent (10, 11), l'élément d'extrémité de la seconde pièce polaire qui est diamétralement opposé fait également face à une dent et les deux autres éléments d'extrémité des pièces polaires font face à des entredents (12, 13), de sorte que, lors du mouvement de rotation, le flux magnétique passe alternativement par l'élément d'extrémité (5') d'une pièce polaire (5) jusqu'à l'élément d'extrémité (6"), diamétralement opposé, de la pièce polaire (6) disposée sur la seconde surface polaire, puis d'une manière diamétralement opposée par les deux autres éléments d'extrémité (5", 6') des pièces polaires (5, 6).

2. Dispositif permettant de mesurer un mouvement de rotation et de produire un signal électrique fluctuant représentant le mouvement de rotation, comprenant un générateur de signal qui tourne avec la pièce exécutant le mouvement de rotation, et un détecteur de valeur de mesure, de type inductif et fixe, qui comporte une bobine de mesure à deux côtés qui comprend un noyau de bobine et des pièces polaires et dans laquelle le flux magnétique traversant la bobine de mesure aux deux extrémités axiales de la bobine est soumis à l'influence du générateur de signal,
caractérisé en ce que le générateur de signal comprend deux roues dentées (15, 17) accouplées l'une à l'autre entre lesquelles le détecteur de valeur de mesure (14, 19) est disposé,
en ce que le noyau de bobine est constitué d'un aimant permanent aimanté perpendiculairement à l'axe de la bobine et de deux pièces polaires de forme allongée qui sont disposées sur les pièces polaires de l'aimant, parallèlement à l'axe de bobine et dont des éléments d'extrémité font saillie des deux côtés hors de la bobine et s'étendent jusqu'aux dentures,
ainsi qu'en ce que les roues dentées et les pièces polaires sont réalisées et disposées de façon telle que, chaque fois que l'élément d'extrémité d'une pièce polaire fait face a une dent (40), l'élément d'extrémité de la seconde pièce polaire qui fait saillie par le second côté de la bobine fait également face à une dent (42) et les deux autres éléments d'extrémité des pièces polaires font face à des entredents, de sorte que, lors du mouvement de rotation, le flux magnétique passe alternativement par l'élément d'extrémité d'une pièce polaire jusqu'à l'élément d'extrémité, diamétralement opposé, de la pièce polaire disposée sur la seconde surface polaire, puis d'une manière diamétralement opposée par les deux autres éléments d'extrémité des pièces polaires, etc..

3. Dispositif selon la revendication 2, caractérisé en ce que les deux roues dentées (17, 19) du générateur de signal sont disposées d'une manière coaxiale, la roue dentée extérieure (17) étant pourvue d'une denture intérieure (18) et la roue dentée intérieure (15) d'une denture extérieure (16).

4. Dispositif selon la revendication 2, caractérisé en ce que les deux roues dentées (20, 21) sont disposées parallèlement l'une à l'autre et sont dentées sur les surfaces frontales qui se font face.

5. Dispositif selon une ou plusieurs des revendications 1 à 4, caractérisé en ce qu'à la place des roues dentées, il est prévu des anneaux comportant des évidements ou des anneaux composés de segments magnétiques et de segments non magnétiques, tandis que les évidements ou les zones comportant une matière non magnétique correspondent aux entredents.
